# EUROPÄISCHE PATENTSCHRIFT

(11) **EP 0 827 247 B1**
(45) Veröffentlichungstag und Bekanntmachung des Hinweises auf die Patenterteilung: **30.08.2006**
(21) Anmeldenummer: 97111258.6
(22) Anmeldetag: 04.07.1997
(51) Int. Cl.: H02G 3/06

(54) **Einrichtung zur zugentlasteten Einführung eines elektrischen Kabels in ein Gehäuse**
Electrical cable box entry with strain relieving device
Entrée de boîtier pour câble électrique à soulagement de tension

(30) Priorität: 27.08.1996 DE 29614814 U
(43) Veröffentlichungstag der Anmeldung: 04.03.1998
(73) Patentinhaber: ROBERT BOSCH GMBH, 70442 Stuttgart (DE)
(72) Erfinder: Welte, Christian, 72654 Neckartenzlingen (DE); Schmuker, Franz, 73117 Wangen (DE); Oehrlein, Manfred, 73249 Wernau (DE); Pflomm, Berthold, 89075 Ulm (DE); Rehfuss, Herbert, 73760 Ostfildern (DE); Macho, Alexander, 73249 Wernau (DE); Heinz, Stefan, 72411 Bodelshausen (DE)

(56) Entgegenhaltungen:
- DE-A- 4 405 328
- DE-U- 8 031 567
- US-A- 5 052 643
- US-A- 5 422 436

## Beschreibung

Die Erfindung geht aus von einer Einrichtung zur zugentlasteten Einführung eines elektrischen Kabels in ein Gehäuse nach der Gattung des Hauptanspruchs.

### Stand der Technik

Bei bekannten Einrichtungen sind die Spannelemente als Schellen ausgebildet, die mittels Schrauben die Kabelklemmung ausüben und am Gehäuse befestigt sind. Bei dieser Anordnung erfolgen die für die Klemmung und Zugentlastung des Kabels notwendigen Arbeitsgänge erst, wenn das Kabel schon durch die Einführöffnung hindurchgeführt ist. Das kann die Arbeit des Installateurs insbesondere bei schwer zugänglich angeordneten Gehäusen und unflexiblen Kabeln, zum Beispiel Feuchtraumleitungen, nicht unerheblich erschweren.

Aus DE 44 05 328 A1 ist eine Kabeleinführvorrichtung mit einer Zugentlastung für ein elektrisches Kabel bekannt, wobei die Kabeleinführvorrichtung eine stegförmige Aufnahme mit Einführöffnungen aufweist, in die ein Zugentlastungsmodul in Form eines Gehäuses einschiebbar ist. Das Gehäuse des Zugentlastungsmoduls besteht dabei aus zwei Gehäuseteilen, zwischen denen das Kabel mittels einer Dichtung geklemmt wird. Die beiden Gehäuseteile werden dabei beim Zusammenstecken verrastet. Das mit den beiden zusammengesteckten Gehäuseteilen gesicherte elektrische Kabel wird dann mittels Führungen in die Einführöffnung der stegförmigen Aufnahme eingeschoben.

Eine ähnliche Kabeleinführvorrichtung geht aus US 5 422 436 hervor. Hierbei wird das elektrische Kabel in einem Zugentlastungsmodul in einer Buchse mit gestuften Öffnungsquerschnitten elastisch verspannt.

Eine Kabeldurchführung mit einer Zugentlastung geht weiterhin aus DE 80 31 567 U1 hervor, die ein Modulgehäuse mit einer Öffnung zur Durchführung des Kabels und einer dazu angeordneten Querbohrung zur Aufnahme einer Spannschraube aufweist. Mittels der Spannschraube wird das elektrische Kabel im Gehäusemodul verspannt. Das Gehäusemodul weist an einem Endabschnitt Schlitze auf, durch die eine federnde Ausbildung des Modulgehäuses erzielt wird. Mittels des federnden Endabschnitts wird das Modulgehäuse in einer Öffnung einer Aufnahme verspannt. Zusätzlich ist zur radialen Lagejustierung ein Vorsprung am Modulgehäuse angeordnet, der in eine entsprechende Aussparung in der Aufnahme einrastet.

Schließlich ist aus US 5 052 643 eine Kabeldurchführung mit einer Zugentlastung bekannt, bei der das Kabel mittels einer Spannschraube in einem Modulgehäuse verspannt wird, wobei die Spannschraube auf eine Spannzunge drückt, die wiederum das Kabel im Modulgehäuse arretiert. Zusätzlich besitzt das Modulgehäuse elastische Schultern, mit denen das Modulgehäuse in eine Öffnung einer Aufnahme einsetzbar ist.

### Vorteile der Erfindung

Die erfindungsgemäße Anordnung mit den Merkmalen des Hauptanspruchs hat den Vorteil, dass die Spannelemente bereits vor dem Einführen des Kabels in das Gehäuse an das Kabel angeklemmt werden und danach die Einführung des Kabels keine weiteren Schwierigkeiten bereitet. Dadurch, dass das Modulgehäuse an seinen parallel zur Einschieberichtung stehenden Wandflächen mit Gegenschultern am Gehäuse zusammenwirkende Rastmittel hat, ist der Einbau des Kabels mit dem Modulgehäuse in das Gehäuse einfach zu handhaben.

Durch die in den Unteransprüchen aufgeführten Merkmale sind vorteilhafte Ausgestaltungen der Anordnung nach dem Hauptanspruch möglich.

Das Zusammenfügen der Spannelemente mit dem Kabel wird erleichtert und gleichzeitig wird eine sichere Klemmwirkung erzielt, wenn ein erstes Spannelement als Modulgehäuse mit einer durchgehenden Bohrung zur Aufnahme des Kabels ausgebildet ist, in welche eine Gewindebohrung zur Aufnahme eines als Schraubglied ausgebildeten zweiten Spannelementes einmündet. Zur Erhöhung der Klemmwirkung kann das als Schraubglied ausgebildete zweite Spannelement im Klemmbereich mit keilförmig ausgebildeten Rippen versehen sein.

Der Einbau des Kabels mit dem bereits montierten Zugentlastungsmodul gestaltet sich weiterhin einfach, wenn das Modulgehäuse an seinen parallel zur Einschieberichtung stehenden Wandflächen mit den Rand der Einführöffnung beidseitig übergreifenden Stützschultern versehen ist. In diesem Fall kommen beim Einschieben des Zugentlastungsmoduls in das Gehäuse die Stützschultern an den Teilen selbsttätig in Eingriff, so dass weitere Arbeitsgänge hierfür entfallen.

Die Rastung lässt sich einfach aufheben, wenn die Gegenschultern an federnd auslenkbaren Wandstegen des Gehäuses vorgesehen sind.

Zur Abdichtung der Kabeleinführung wird vorgeschlagen, an das aus verzugsarmen Kunststoff bestehende Modulgehäuse eine Tülle aus weicherem Material anzuspritzen.

Die Herstellung von aus Kunststoff bestehenden Modulgehäusen wird erleichtert, wenn das Modulgehäuse aus zwei Gehäuseteilen besteht, von denen das erste zwei freistehende, innen mit Gewindeabschnitten versehene Seitenwände hat und das zweite Gehäuseteil eine mit der Ausgangsöffnung für das Kabel versehene Deckwand bildet.

Diese Ausbildung ergibt sich, wenn die Teilungsebene der beiden Gehäuseteile das Kreisprofil der Gewindebohrung anschneidet und die beiden Seitenwände an der Rückseite des Modulgehäuses keine Verbindung miteinander haben. Durch entsprechende Positionierung der Teilungsebene wird erreicht, daß das erste Gehäuseteil im Kunststoff-Werkzeug zwangsentformt werden kann und nicht aus diesem aufwendig ausgedreht werden muß. Außerdem kann das Schraubglied von der Ausgangsseite des Modulgehäuses her unter Auslenkung der beiden Seitenwände einfach in die Gewindebohrung eingedrückt werden, so daß ein zeitbeanspruchendes Eindrehen des Schraubglieds entfällt. Nach dem Einsetzen des Schraubglieds werden beide Gehäuseteile vorzugsweise durch Ultraschweißung miteinander verbunden.

Eine sichere Abstützung des geklemmten Kabels im geteilten Modulgehäuse wird erreicht, wenn das zweite Gehäuseteil auch mindestens einen Abschnitt der Rückwand des Modulgehäuses bildet. Dabei kann der die Rückwand bildende Abschnitt zwischen Schultern an den Seitenwänden des ersten Gehäuseteils zusätzlich geführt sein.

Zur Sicherung des Schraubglieds gegen unbeabsichtigtes Heraustreten aus der Gewindebohrung wird vorgeschlagen, daß mindestens ein Gehäuseteil am Eingang der Gewindebohrung mit einem in das Kreisprofil des Schraubglieds ragenden Bund versehen ist.

### Zeichnung

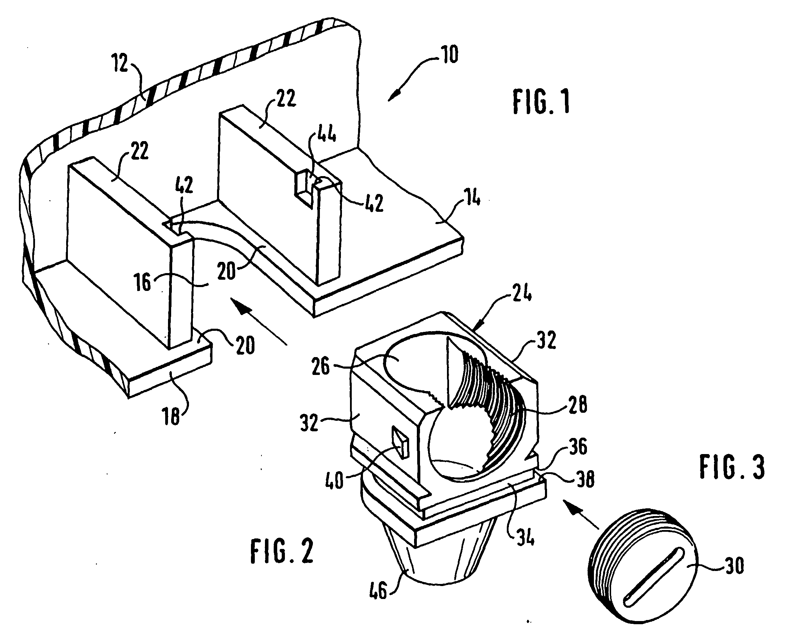

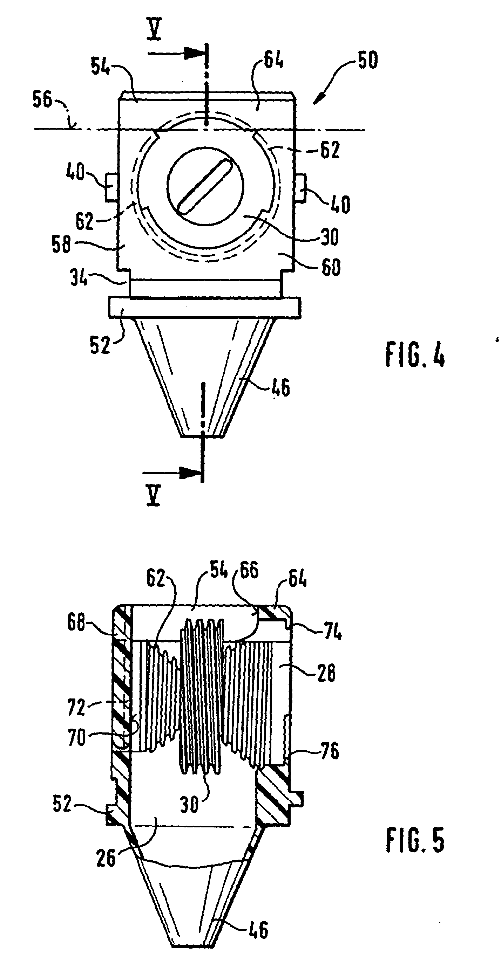

Zwei Ausführungsbeispiele der Erfindung sind in der Zeichnung teilweise perspektivisch dargestellt und in der folgenden Beschreibung näher erläutert. Es zeigen Figur 1 einen Teilbereich eines elektronischen Steuergehäuses, die Figuren 2 und 3 das erste und das zweite Spannelement des ersten Ausführungsbeispiels, Figur 4 eine Draufsicht auf das Modulgehäuse nach dem zweiten Ausführungsbeispiel und Figur 5 einen Schnitt nach der Linie V-V in Figur 4.

### Beschreibung der Ausführungsbeispiele

Ein Steuergehäuse 10 hat eine senkrecht stehende Montagewand 12, an der ein waagerecht abstehender Flansch 14 einstückig angeformt ist. In diesem ist eine Einführöffnung 16 für ein elektrisches Kabel vorgesehen, die zum Rand 18 des Flansches 14 hin offen ausgebildet ist. Die Einführöffnung 16 ist dort durch gestreckte Randbereiche 20 begrenzt, neben denen je ein senkrechter Wandsteg 22 angeordnet ist.

Zur zugentlasteten Festlegung des Kabels in der Einführöffnung 16 ist ein für sich handhabbares, vorab auf das Kabel aufklemmbares Modul vorgesehen, das aus den beiden in den Figuren 2 und 3 dargestellten Spannelementen besteht. Das Spannelement nach Figur 2 ist als Modulgehäuse 24 ausgebildet, welches mit einer durchgehenden Bohrung 26 zur Aufnahme des Kabels versehen ist. In die Bohrung 26 mündet von vorn eine Gewindebohrung 28 ein, die das als Schraubglied 30 ausgebildete zweite Spannelement des Moduls aufnimmt. Nach dem Durchstecken des Kabels durch das Modulgehäuse 24 wird mit dem Schraubglied 30 das Kabel so fest an die Wand der Bohrung 26 angepreßt, daß die für eine sichere Kabelentlastung erforderliche Klemmkraft erreicht wird.

Das Modulgehäuse 24 ist so ausgebildet und bemessen, daß es vom Rand des Flansches 14 her in die Einführöffnung 16 eingeschoben werden kann. Zu diesem Zweck ist das Modulgehäuse 24 außen mit einer umlaufenden Längsnut 34 versehen, deren Nutflanken 36, 38 die Randbereiche 20 der Einführöffnung 16 oben und unten übergreifen. Die Nutflanken 36, 38 dienen so neben ihrer Führungsfunktion als Stützschultern, die das Zugentlastungsmodul 24, 30 samt Kabel in dessen Längsrichtung gegenüber dem Steuergehäuse 10 festlegen.

Das Modulgehäuse 24 ist ferner an den beiden Wandflächen 32 mit je einer Rastnase 40 versehen, die mit Gegenschultern 42 korrespondieren, welche an Vertiefungen 44 in den beiden senkrechten Wandstegen 22 des Steuergehäuses 10 korrespondieren. Die Rastnasen 40 schnappen hinter die Gegenschultern 42, wenn das Modulgehäuse 24 bis an die Montagewand 12 des Steuergerätes 10 herangeschoben ist. Zum Lösen der Rastverbindung sind die beiden Wandstege 22 leicht federnd ausgeführt und die Vertiefungen 44 so bemessen, daß in diese eingeführte Werkzeuge die Wandstege 22 nach außen auszulenken vermögen.

Das Modulgehäuse 24 ist aus einem verzugsarmen Kunststoff gebildet. Zur Abdichtung der Kabeleinführung ist an das Modulgehäuse 24 eine Tülle 46 angespritzt, die aus einem weicheren Material mit gummielastischen Eigenschaften besteht. Der Querschnitt der Tülle 46 verläuft konisch, so daß durch ein Ablängen der Tülle 46 an der dem Kabeldurchmesser entsprechenden Stelle eine spritzwassergeschützte Durchführung realisiert ist.

Das aus den Spannelementen 24 und 30 bestehende Zugentlastungsmodul wird bereits vor dem Einbau des Kabels auf dieses aufgeklemmt und kann danach einfach mit dem Kabel in die Einführöffnung 16 eingeschoben werden, bis die Rastmittel 40, 42 greifen. Danach wird ein in der Zeichnung nicht dargestellter Deckel auf das Steuergehäuse 10 aufgesetzt, welcher die an der Montagewand 12 befestigten elektrischen Bauelemente und das Zugentlastungsmodul 24, 30 nach außen hin abdeckt.

Beim Ausführungsbeispiel nach den Figuren 4 und 5 ist ein aus Kunststoff bestehendes Modulgehäuse 50 aus einem ersten Gehäuseteil 52 und einem zweiten Gehäuseteil 54 gebildet, die beide nach dem Einsetzen des Schraubglieds 30 durch Ultraschweißung miteinander verbunden sind. Nach dem Verbinden der beiden Gehäuseteile 52, 54 hat das Modulgehäuse 50 im wesentlichen die gleiche Gestalt und Ausbildung der Außenseiten wie das vorbeschriebene Modulgehäuse 24, so daß sich eine weitere Beschreibung diesbezüglich erübrigt und die Bezugszahlen für die betreffenden Merkmale vom ersten Ausführungsbeispiel übernommen sind.

Die Teilungsebene 56 der beiden Gehäuseteile 52, 54 ist so gelegt, daß sie das Kreisprofil der Gewindebohrung 28 anschneidet. Außerdem ist das Gehäuseteil 52 an der in der Zeichnung hintenliegenden Rückseite des Modulgehäuses 50 im Bereich der Gewindebohrung 28 offen ausgebildet. Dadurch sind in diesem Bereich zwei federnd auslenkbare Seitenwände 58, 60 gebildet, deren Innenseiten je mit einem Gewindeabschnitt 62 der Gewindebohrung 28 versehen sind. Das Schraubglied 30 wird einfach von oben her unter vorübergehender Auslenkung der beiden Seitenwände 58, 60 in die Gewindebohrung 28 eingedrückt.

Das zweite Gehäuseteil 54 hat eine auf den Seitenwänden 58, 60 oben aufliegende Deckwand 64, in der eine Ausgangsöffnung 66 für das Kabel vorgesehen ist. An die Deckwand 64 ist im rechten Winkel eine Rückwand 68 angeformt, welche passend zwischen die Seitenwände 58, 60 greift und die Gewindebohrung 28 hinten schließt. Die Rückwand 68 ist zwischen Längsstegen - beziehungsweise Schultern 70, 72 an den Seitenwänden 58, 60 geführt und formschlüssig abgestützt. Beide Gehäuseteile 52, 54 sind am Eingang der Gewindebohrung 28 je mit einem Bund 74 beziehungsweise 76 als Verliersicherung für das Schraubglied 30 versehen.
Bei diesem Ausführungsbeispiel ist die Tülle 46 zur Abdichtung des Kabels einstückig aus dem Modulgehäuse 50 gebildet, wobei durch eine entsprechende Wahl des Kunststoffs und eine dünne Wandstärke der Tülle 46 ebenfalls gummielastische Eigenschaften erzielt sind.

## Patentansprüche

1. Einrichtung zur zugentlasteten Einführung eines elektrischen Kabels in ein Gehäuse(10), mit das Kabel radial klemmenden Spannelementen (24, 50, 30), wobei die Spannelemente (24, 50, 30) zu einem vorab an das Kabel anklemmbaren Modul zusammengefasst sind, das in das Gehäuse (10) in eine nach einer Seite hin offene Einführöffnung (16) passend einschiebbar ist, und wobei ein erstes Spannelement als Modulgehäuse (24 bzw. 50) mit einer durchgehenden Bohrung (26) zur Aufnahme des Kabels ausgebildet ist, **dadurch gekennzeichnet, dass** das Modulgehäuse (24 bzw. 50) an seinen parallel zur Einschieberichtung stehenden Wandflächen (32) mit Gegenschultern (42) am Gehäuse (10) zusammenwirkende Rastmittel (40) hat.

2. Einrichtung nach Anspruch 1, **dadurch gekennzeichnet, dass** in die Bohrung (26) eine Gewindebohrung (28) zur Aufnahme eines als Schraubglied (30) ausgebildeten zweiten Spannelements einmündet.

3. Einrichtung nach Anspruch 2, **dadurch gekennzeichnet, daß** das Modulgehäuse (24 bzw. 50) an seinen parallel zur Einschieberichtung stehenden Wandflächen (32) mit den Rand (20) der Einführöffnung (16) beidseitig übergreifenden Stützschultern (36, 38) versehen ist.

4. Einrichtung nach Anspruch 3, **dadurch gekennzeichnet, daß** die Gegenschultern (42) an federnd auslenkbaren Wandstegen (22) des Gehäuses (10) vorgesehen sind.

5. Einrichtung nach einem der Ansprüche 2 bis 4, **dadurch gekennzeichnet, daß** an das aus verzugsarmen Kunststoff bestehende Modulgehäuse (24) eine Tülle (26) aus weicherem Material angespritzt ist.

6. Einrichtung nach einem der Ansprüche 2 bis 5, mit einem Modulgehäuse aus Kunststoff, **dadurch gekennzeichnet, daß** das Modulgehäuse (50) aus zwei Gehäuseteilen (52, 54) besteht, von denen das erste (52) zwei freistehende, innen mit Gewindeabschnitten (62) versehene Seitenwände (58, 60) hat und das zweite Gehäuseteil (54) eine mit der Ausgangsöffnung (66) für das Kabel versehene Deckwand (64) bildet.

7. Einrichtung nach Anspruch 6, **dadurch gekennzeichnet, daß** das zweite Gehäuseteil (54) auch mindestens einen Abschnitt der Rückwand (68) des Modulgehäuses (50) bildet.

8. Einrichtung nach Anspruch 6 oder 7, **dadurch gekennzeichnet, daß** mindestens ein Gehäuseteil (52, 54) am Eingang der Gewindebohrung (28) mit einem in das Kreisprofil des Schraubglieds (30) ragenden Bund (74 bzw. 76) versehen ist.

9. Einrichtung nach einem der Ansprüche 6 bis 8, **dadurch gekennzeichnet, daß** die Tülle (46) einstückig aus dem Modulgehäuse (50) gebildet ist.

10. Einrichtung nach einem der vorhergehenden Ansprüche, **dadurch gekennzeichnet, daß** das Spannelement (24 bzw. 50) in Zugrichtung des Kabels mit an der Einführöffnung (16) vorgesehenen Gehäuseschultern zusammenwirkt.

## Claims

1. A device for strain-relieved insertion of an electrical cable into a housing (20) comprising clamping elements (24, 50, 30) which radially clip the cable, wherein the clamping elements (24, 50, 30) are combined to form a module which can be preliminarily clipped onto the cable, which is inserted into the housing (10) fitting into a lead-in opening (16) open towards one side, and wherein a first clamping element is constructed as a module housing (24, or 50) with a through hole (26) for receiving the cable, **characterised in that** the module housing (24 or 50) has locating means (40) cooperating with counter-shoulders (42) on the housing (10) on its wall faces (32) parallel to the direction of insertion.

2. The device according to claim 1, **characterised in that** a threaded hole (28) for receiving a second clamping element constructed as a screw member (30) opens into the hole (26).

3. The device according to claim 2, **characterised in that** on its wall faces (32) parallel to the direction of insertion, the module housing (24 or 50) is provided with supporting shoulders (36, 38) which overlap the edge (20) of the lead-in opening (16) on both sides.

4. The device according to claim 3, **characterised in that** the counter-shoulders (42) are provided on resiliently deflectable wall cross-pieces (22) of the housing (10).

5. The device according to any one of claims 2 to 4, **characterised in that** a grommet (26) of softer material is sprayed onto the module housing (24) consisting of low-warping plastic.

6. The device according to any one of claims 2 to 5, comprising a module housing made of plastic, **characterised in that** the module housing (50) consists of two housing portions (52, 54) of which the first (52) has two free-standing side walls (58, 60) provided with threaded sections (62) on the inside and the second housing portion (54) forms a top wall (64) provided with the outlet opening (66) for the cable.

7. The device according to claim 6, **characterised in that** the second housing portion (54) also forms at least one section of the rear wall (68) of the module housing (50).

8. The device according to claim 6 or 7, **characterised in that** at least one housing portion (52, 54) at the entrance of the threaded hole (28) is provided with a collar (74 or 76) which projects into the circular profile of the screw member (30).

9. The device according to any one of claims 6 to 8, **characterised in that** the grommet (46) is formed in one piece from the module housing (50).

10. The device according to any one of the preceding claims, **characterised in that** the clamping element (24 or 50) cooperates with housing shoulders provided at the lead-in opening (16) in the pulling direction of the cable.

## Revendications

1. Dispositif pour l'introduction déchargée en traction d'un câble électrique dans un boîtier (10), avec des éléments de serrage (24, 50, 30) serrant radialement le câble, les éléments de serrage (24, 50, 30) étant regroupés pour former un module pouvant être serré auparavant sur le câble, qui peut être introduit de façon ajustée dans le boîtier (10) dans une ouverture d'introduction (16) ouverte vers un côté, et un premier élément de serrage étant conçu comme boîtier de module (24 ou 50) avec un alésage (26) continu pour le logement du câble,
**caractérisé en ce que** le boîtier de module (24 ou 50) présente sur ses surfaces de paroi (32) parallèles au sens d'introduction des moyens d'arrêt (40) coopérant avec des contre-épaulements (42) sur le boîtier (10).

2. Dispositif selon la revendication 1, **caractérisé en ce qu'**un alésage fileté (28) débouche dans l'alésage (26) pour le logement d'un second élément de serrage conçu comme élément de vissage (30).

3. Dispositif selon la revendication 2, **caractérisé en ce que** le boîtier de module (24 ou 50) est doté sur ses surfaces de paroi (32) parallèles au sens d'introduction d'épaulements de soutien (36, 38) recouvrant des deux côtés le bord (20) de l'ouverture d'introduction (16).

4. Dispositif selon la revendication 3, **caractérisé en ce que** les contre-épaulements (42) sont prévus sur des nervures de paroi (22) pouvant être déviées de façon élastique du boîtier (10).

5. Dispositif selon l'une quelconque des revendications 2 à 4, **caractérisé en ce qu'**un passe-câble (26) à base de matériau assez souple est injecté sur le boîtier de module (24) à base de plastique peu déformable.

6. Dispositif selon l'une quelconque des revendications 2 à 5, avec un boîtier de module en matière synthétique, **caractérisé en ce que** le boîtier de module (50) se compose de deux parties de boîtier (52, 54), dont la première (52) présente deux parois latérales (58, 60) isolées et dotées à l'intérieur de parties filetées (62) et la seconde partie de boîtier (54) forme une paroi de recouvrement (64) dotée de l'ouverture de sortie (66) pour le câble.

7. Dispositif selon la revendication 6, **caractérisé en ce que** la seconde partie de boîtier (54) forme également au moins une partie de la paroi arrière (68) du boîtier de module (50).

8. Dispositif selon la revendication 6 ou 7, **caractérisé en ce qu'**au moins une partie de boîtier (52, 54) est dotée à l'entrée de l'alésage fileté (28) d'une collerette (74 ou 76) dépassant dans le profil circulaire de l'élément de vissage (30).

9. Dispositif selon l'une quelconque des revendications 6 à 8, **caractérisé en ce que** le passe-câble (46) est formé d'une seule pièce dans le boîtier de module (50).

10. Dispositif selon l'une quelconque des revendications précédentes, **caractérisé en ce que** l'élément de serrage (24 ou 50) agit conjointement dans le sens de traction du câble avec des épaulements de boîtier prévus sur l'ouverture d'introduction (16).
